# EUROPEAN PATENT SPECIFICATION

(11) **EP 1 905 569 B1**
(45) Date of publication and mention of the grant of the patent: **24.12.2014**
(21) Application number: 07117138.3
(22) Date of filing: 25.09.2007
(51) Int. Cl.: B29C 49/78, B29C 49/06, B29C 49/16

(54) **Apparatus and relative operating method for blow moulding plastic containers and recovering compressed blow moulding gas**
Vorrichtung und dazugehörendes Verfahren zum herstellen von Kunststoffbehältern und wiedergewinnen von komprimiertem Blasgas
Procédé et appareil permettant de fabriquer des recipients en matière plastique par soufflage et de recuperer l'air de soufflage comprimé

(30) Priority: 26.09.2006 IT TV20060169
(43) Date of publication of application: 02.04.2008
(73) Proprietor: ACQUA MINERALE SAN BENEDETTO S.p.A., I-30037 Scorze' (Prov. of Venezia) (IT)
(72) Inventor: Zoppas, Enrico c/o Acqua Minerale San Benedetto S.p.A., 30037 SCORZE' (IT)
(74) Representative: Bergadano, Mirko

(56) References cited:
- EP-A- 1 777 056
- EP-A- 1 974 892
- DE-A1-102004 014 653
- JP-A- 11 207 808

## Description

The present invention relates to an apparatus and relative operating method for blow molding plastic containers and recovering compressed blow molding gas.

More specifically, the present invention relates to an apparatus for blow molding plastic bottles from a preform, and designed to recover the compressed gas contained inside the bottle formed by blow molding the preform, for reuse in blow molding the next preform; to which application, the following description refers purely by way of example.

As is known, the method employed by known plastic bottle manufacturing systems substantially comprises forming a preform of the bottle from semisolid, highly viscous, easily deformable plastic material; placing the preform inside a mold having an inner cavity negatively reproducing the shape of the bottle being produced; and blowing compressed gas, typically air, into the preform to gradually expand the preform inside the mold into the shape of the bottle.

More specifically, the preform is currently blown in two separate, consecutive steps : a first "low-pressure" air pre-injection step, in which compressed air at a first pressure, typically of about 10 bars, is blown into the preform to partly expand the preform inside the mold; and a second step, in which "high-pressure" air is blown into the preform to expand the preform inside the mold into the final shape of the bottle. More specifically, at the second step, compressed air is blown into the preform at a second pressure normally ranging between 30 and 40 bars, to obtain the final shape of the bottle.

In the plastic bottle manufacturing industry, a strong demand exists to reduce manufacturing cost by making better use of the compressed gas or air used to blow mold the bottles. The blow molding air or gas, in fact, is compressed using compressors, the energy consumption of which greatly increases the production cost of the bottles.

United States Patent Application US2004/0173949 describes a plastic bottle blow molding apparatus which, after the second injection step, recovers the high-pressure compressed air, injected into the preform, inside a recovery tank. The tank keeps the recovered compressed air at a pressure substantially equal to the low pressure mentioned above, and feeds it, on command, via a distribution circuit, to a pre-injection valve which, in turn, pre-injects low-pressure compressed air into the preform.

By recovering and reusing the low-pressure compressed air, the apparatus described in United States Patent Application US2004/0173949 reduces low-pressure air compression cost, but provides for no reduction in the volume of high-pressure compressed air required to perform the second injection step.

DE102004014653 discloses a process for the manufacture of a hollow body, wherein medium is stored in a first medium storage unit and is under a first pressure, medium is stored in a second medium storage unit and the pressure of which is higher than the first pressure of the first medium (final blowing phase), and wherein hollow body is cooled by a third medium, which is medium stored in a third medium storage unit.

JP11207808 discloses a loop pipe line circuit B1 in a blow-in pneumatic circuit which is equipped with respective high pressure, middle pressure, and low pressure loop pipe lines, and a blow-in control circuit supplies blow-in air to a parson via a blow-in pipe line through the loop pipe lines.

JP 11207808 also discloses an apparatus and method according to the preambles of the claims 1 and 7 with the difference that the first used blowing pressure is not 10 but 6-7 bar.

EP1777056 discloses an apparatus for blow moulding articles from thermoplastic material, which includes a mould defining a mould cavity for a heated thermoplastic parison.

EP1974892 discloses a method for blow moulding wherein the pressure is built up in stages in a blow-full stage like a cascade and then deflated in reverse stages also like a cascade.

Since compressors consume more energy to compress high-pressure than low-pressure air, the above apparatus provides for no more than a partial reduction in manufacturing cost, and so fails to meet the cost-reduction demands of bottle manufacturers.

It is therefore an object of the present invention to provide an apparatus and method for blow molding plastic containers, which apparatus and method are cheap and easy to implement, and provide for recovering and reusing high-pressure compressed gas to reduce the volume of high-pressure gas that must be compressed to perform the second injection step.

According to the present invention, there is provided an apparatus for blow molding plastic containers, as claimed in Claim 1 and preferably, though not necessarily, in any one of the dependent Claims.

According to the present invention, there is also provided a method of blow molding plastic containers, as claimed in Claim 9 and preferably, though not necessarily, in any one of the dependent Claims.

A non-limiting embodiment of the present invention will be described by way of example with reference to the accompanying drawings, in which:
Figure 1 shows a schematic of an apparatus for blow molding plastic containers and recovering compressed blow molding gas;
Figure. 2 shows a flow chart of the operations performed by the Figure 1 apparatus in the course of a recovery and blow cycle;
Figure 3 shows, by way of example, a time-pressure graph of the gas injected/recovered into/from the preform in the course of a preform blow cycle in accordance with a method performed by the Figure 1 apparatus;
Figures 4a, 4b, 4c, 4d show, schematically, expansion of the preform at three consecutive injection steps performed by the Figure 1 apparatus;
Figure 5 shows a schematic of a variation of the Figure 1 apparatus for blow molding plastic containers in accordance with the teaching of the present invention;
Figure 6 shows, by way of example, a time-pressure graph of the gas injected/recovered into/from the preform in the course of a multiple preform blow/recovery cycle of the Figure 5 apparatus in accordance with the teaching of the present invention.

The present invention is substantially based on the principle of recovering, after blowing each preform, the compressed gas inside the plastic container formed from the preform, and storing it inside an additional tank, in which it is kept at an intermediate pressure higher than a first pressure corresponding to the pre-injection pressure, and lower than a second blow pressure corresponding to the usual high pressure. The gas in the additional tank is advantageously used for blowing successive preforms.

More specifically, blowing each post-recovery preform comprises the following steps:
- pre-injecting the preform with compressed gas at a first pressure, corresponding to the known pre-injection pressure, to produce a first expansion of the preform inside the mold;
- additionally injecting the preform with gas recovered in the tank at the predetermined said intermediate pressure, to produce an intermediate expansion of the preform; and
- finally injecting the preform with compressed gas at a second pressure, corresponding to the high pressure, to produce a final expansion of the preform inside the mold and so form the container.

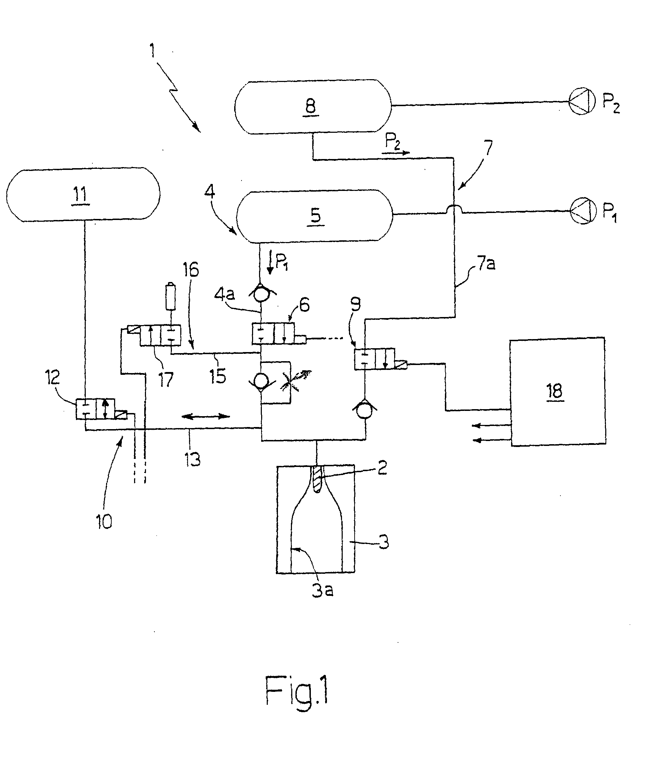

Number 1 in Figure 1 indicates as a whole an apparatus for blow molding plastic containers, in particular bottles for consumable liquids, such as water, soft drinks, or any other similar liquid.

Apparatus 1 provides for blowing gas, in particular compressed air, into at least one preform 2 of semisolid plastic material housed inside a mold 3, to obtain at least three different consecutive expansions of the inner volume of preform 2, and obtain, by the end of the last expansion, a plastic bottle of predetermined outer shape.

Mold 3 has an inner cavity 3a (shown schematically in Figure 1) housing preform 2 and shaped to negatively reproduce the predetermined outer shape of the bottle.

Apparatus 1 substantially comprises a "low-pressure" blow circuit 4 connected to mold 3 to inject compressed air at a first injection pressure P₁, preferably of about 10 bars, into preform 2 to obtain a partial first expansion of preform 2 towards the walls of inner cavity 3a of mold 3.

More specifically, low-pressure blow circuit 4 substantially comprises a source of compressed air at first pressure P₁, which, in the Figure 1 example, is defined by a low-pressure-air tank 5; and a control valve 6, e.g. an electropneumatic valve, located along a blow conduit 4a connecting an outlet of tank 5 to the inlet/outlet of mold 3, which in turn communicates with the mouth of preform 2 housed inside mold 3.

Control valve 6 is movable, on command, between an open position connecting the outlet of tank 5 to the inlet/outlet of mold 3 to inject low-pressure compressed air into preform 2 inside mold 3, and a closed position cutting off injection.

Apparatus 1 also comprises a high-pressure blow circuit 7 connected to mold 3 to inject air at a second blow pressure P₂, preferably of 30-40 bars, into preform 2 to obtain a final expansion of preform 2 towards the walls of the inner cavity of mold 3 and so form the predetermined outer shape of the bottle.

More specifically, high-pressure blow circuit 7 substantially comprises a source of compressed air at second pressure P₂, which, in the Figure 1 example, is defined by a tank 8 of compressed air at second pressure P₂; a blow conduit 7a connecting an outlet of tank 8 to the inlet/outlet of mold 3; and a control valve 9, e.g. an electropneumatic valve, located along conduit 7a to control compressed-air injection at second pressure P₂ into preform 2.

Control valve 9 is movable, on command, between an open position connecting the outlet of tank 8 to the inlet of mold 3 to inject compressed air at second pressure P₂ into preform 2 inside mold 3, and a closed position in which control valve 9 cuts off injection.

Unlike known blow molding systems, blow molding apparatus 1 comprises a circuit 10 for recovering/injecting air from/into preform 2 at an intermediate pressure P₃, i.e. higher than first pressure P₁ and lower than second pressure P₂. More specifically, the intermediate pressure P₃ of the recovered/injected air is about 17 bars.

In the Figure 1 example, circuit 10 substantially comprises an air recovery tank 11 for recovered compressed air at intermediate pressure P₃; and a control valve 12 located along an injection/recovery conduit 13 connecting tank 11 to the mouth of mold 3.

More specifically, control valve 12 may be defined by an electropneumatic valve, which is movable, on command, between an open position connecting recovery tank 11 to the mouth of mold 3 to recover/inject air from/into preform 2, and a closed position cutting off the above connection.

As described in detail below, when blowing preform 2, opening of control valve 12 allows compressed air stored at intermediate pressure P₃ in tank 11 to flow along injection/recovery conduit 13 into preform 2; and closure of control valve 12 cuts off compressed-air flow to terminate injection.

Conversely, when recovering compressed air, opening of control valve 12 allows the compressed air inside the bottle to flow along injection/recovery conduit 13 into recovery tank 11; and closure of control valve 12 cuts off compressed-air flow to terminate recovery.

Apparatus 1 also comprises an exhaust circuit 16 substantially comprising an exhaust valve 17, which, in the Figure 1 example, is located along a portion of an exhaust conduit 15 connected to the mouth of mold 3, and is movable, on command, into an open position to expel the compressed air from the bottle formed from preform 2, when, during air recovery, the second pressure P₂ inside preform 2 is lower than intermediate pressure P₃.

Apparatus 1 also comprises an electronic control unit 18 for controlling control valves 6, 9, 12 to blow preform 2 and to recover air/gas from the preform into recovery tank 11.

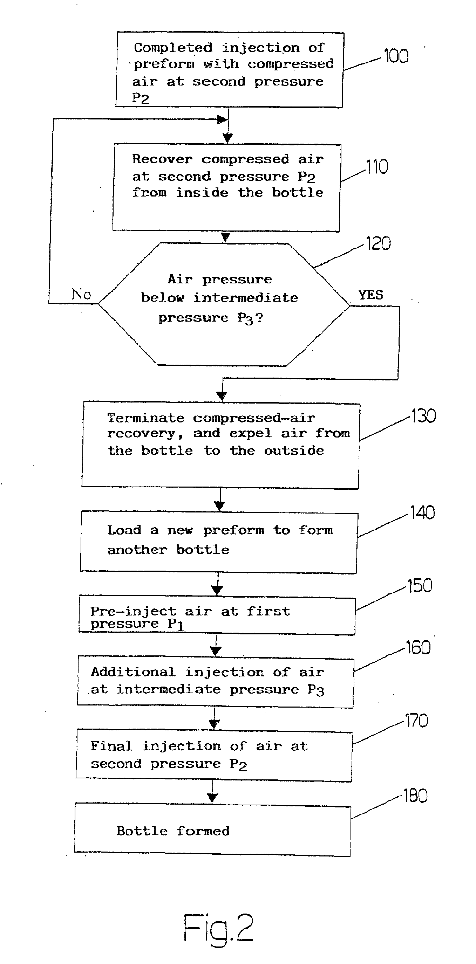

Figure 2 shows a flow chart of the compressed air/gas injection and recovery method implemented by apparatus 1.

To explain how it works, apparatus 1 is assumed to have completed molding a bottle, i.e. has completed injecting preform 2 with air at a pressure substantially equal to second pressure P₂ (block 100).

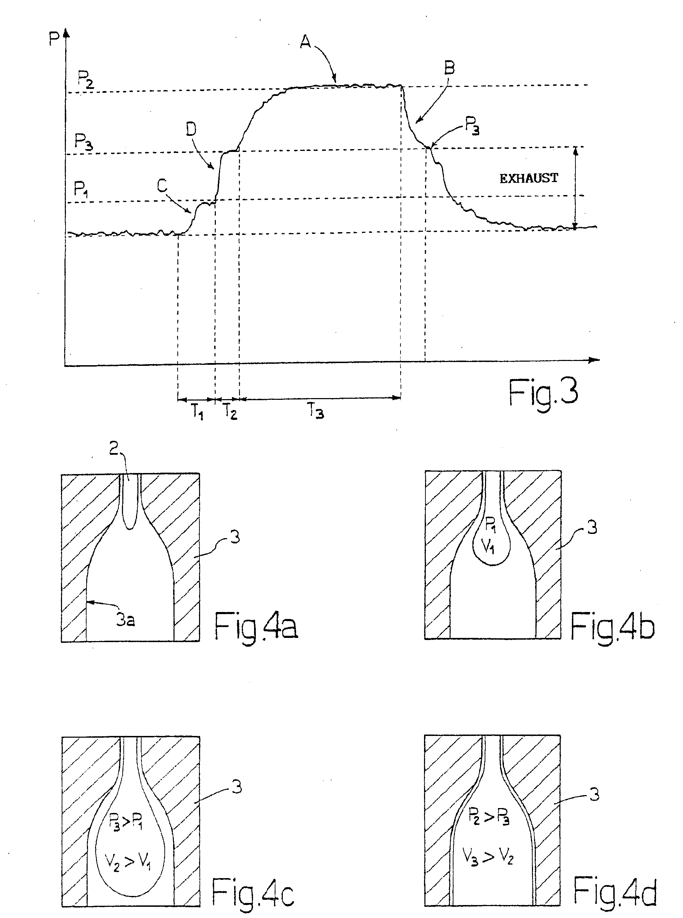

At this stage, the air pressure inside preform 2 therefore reaches second pressure P₂, e.g. 32 bars (as shown by curve portion A in Figure 3).

After a predetermined time interval T₃ indicating air injection time at second pressure P₂, and designed to ensure complete expansion of preform 2 onto the inner walls of the cavity of mold 3 (Figure 4d) and obtain a predetermined volume V₃, electronic control unit 18 closes control valve 9 and opens control valve 12 to cut off injection of compressed air at second pressure P₂ into preform 2, and at the same time commences recovery of the compressed air in the preform into tank 11 (block 110).

At this stage, the compressed air inside preform 2 - by now a bottle - flows along injection/recovery conduit 13 into tank 11, so that the compressed-air pressure inside the bottle gradually falls, as shown by curve portion B in Figure 3. At this stage, electronic control unit 18 keeps control valve 12 open to recover the compressed air in tank 11 until (YES output of block 120) the air pressure in the preform substantially equals predetermined intermediate pressure P₃, preferably of about 17 bars.

As soon as the air pressure in preform 2 falls below predetermined intermediate pressure P₃ (YES output of block 120), electronic control unit 18 closes control valve 12 to terminate air recovery in tank 11, and opens exhaust valve 17 to expel the air from the bottle to the outside (block 130).

It is important to note that tank 11 provides for instantaneously maintaining the recovered compressed air at a constant pressure substantially equal to intermediate pressure P₃.

At this point, a known automatic loading system (not shown) removes the formed bottle from mold 3, and loads another preform 2 into the mold (block 140).

Once preform 2 is loaded inside cavity 3a of mold 3, apparatus 1 commences the preform blowing process (Figures 4a-4d).

To blow the preform, electronic control unit 18 closes exhaust valve 17, and opens control valve 6 to pre-blow preform 2 (block 150). More specifically, at this stage, blow circuit 4 performs a first injection into preform 2 of compressed air at first, i.e. low, pressure P₁ from tank 5 to produce a first increase in the inner volume, i.e. a first partial expansion, of preform 2.

At this stage, electronic control unit 18 keeps control valve 6 open for a predetermined time interval T₁ (Figure 3) designed to achieve said first partial expansion (curve portion C in Figure 3) and an inner volume of V₁<V₃ (Figure 4b).

At the end of time interval T₁, electronic control unit 18 closes control valve 6, and opens control valve 12 to perform an additional injection into preform 2 of compressed air at intermediate pressure P₃ from tank 11 (block 160).

It should be pointed out that, at this stage, preform 2 undergoes a further increase in inner volume, which increases from a volume V₁ to a volume V₂>V₁ (Figure 4c), but is still less than the volume V₃ of the final shape of the bottle (V₂<V₃). The purpose of this step, in fact, is to increase the pressure inside preform 2 and so advantageously reduce the volume of high-pressure compressed air, i.e. at second pressure P₂, to be injected later into preform 2.

Preform 2 is injected with compressed air at intermediate pressure P₃ for a predetermined second time interval T₂ (curve portion D in Figure 3), after which, electronic control unit 18 closes control valve 12 to terminate the additional injection.

At this point, electronic control unit 18 opens control valve 9 to activate final injection of preform 2 with high-pressure air, i.e. at second pressure P₂, from tank 8 (block 170) and so increase the volume of preform 2 to volume V₃ of the finished bottle (block 180) (Figure 4d).

The intermediate injection step has the obvious advantage of reducing the difference in air pressure and volume between the high-pressure injection step and the preceding injection step, and so reducing the volume of high-pressure air/gas to be injected into preform 2.

In fact, at the start of injection at second pressure P₂, the air in preform 2 is at intermediate pressure P₃>P₁, and the volume of preform 2 equals V₂>V₁. Pressure difference ΔPr=P₃-P₂ being less than pressure difference ΔPn=P₂-P₁ (the pressure difference at the second injection in known systems), and the difference V₃-V₂ in the volume of preform 2 being less than difference V₃-V₁ (the difference in volume at the second injection in known systems), the volume of high-pressure air required to complete injection at second pressure P₂ is therefore greatly reduced.

Upon final expansion of preform 2, electronic control unit 18 repeats the above operations (blocks 100-180), i.e. recovers the high-pressure compressed air inside tank 11 (blocks 100-130), and commences pre-blowing another preform (block 150).

Apparatus 1 has the major advantage of reducing the volume of high-pressure air required at the final injection stage to form the bottle, thus saving on energy and, obviously, reducing the manufacturing cost of the plastic bottles.

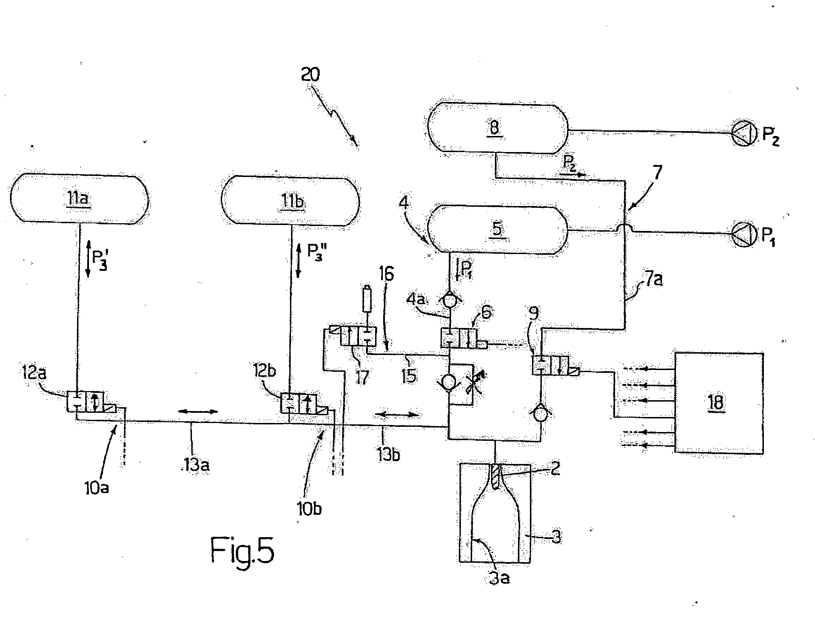

The Figure 5 embodiment relates to an apparatus 20 similar to apparatus 1, and the component parts of which are indicated, where possible, using the same reference numbers as for corresponding parts of apparatus 1.

Apparatus 20 differs from apparatus 1 by recovering/injecting air from/into preform 2 at different intermediate pressures P₃', P₃", P₃"', ..., wherein each pressure P₃ is higher than first pre-injection pressure P₁ and lower than second high-pressure injection pressure P₂.

More specifically, apparatus 20 comprises a number of recovery/injection circuits, two of which, indicated 10a, 10b in the Figure 5 example, are activated sequentially to recover/inject air at a respective intermediate pressure P₃ from/into the preform.

Recovery/injection circuits 10a, 10b each comprise a tank 11a, 11b for recovering air at a respective predetermined intermediate pressure P₃', P₃"; a recovery/injection conduit 13a, 13b; and a control valve 12a, 12b located along corresponding recovery/injection conduit 13a, 13b.

The operating method of apparatus 20 is as follows. Once preform 2 is injected with compressed air at second pressure P₂, i.e. once the bottle is formed, electronic control unit 18 activates control valves 12b and 12a sequentially for two separate consecutive time intervals T₂" and T₂"', so as to effect a multiple air recovery at intermediate pressures P3" and P3' inside respective tanks 11b and 11a.

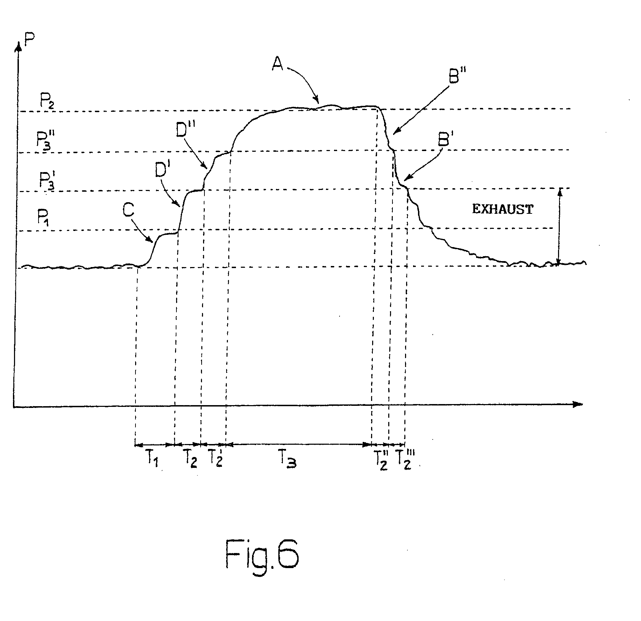

More specifically, at this stage, electronic control unit 18 activates control valve 12b for a time interval T₂" to recover compressed air at pressure P₃" inside tank 11b (curve portion B" in Figure 6), then deactivates it and activates control valve 12a for a time interval T₂"' to recover compressed air at pressure P₃' inside tank 11a.

At this point, multiple air injection into preform 2 can be performed, and which, following pre-injection, i.e. compressed-air injection at first pressure P₁, comprises two consecutive compressed-air injections into preform 2 at respective intermediate pressures P₃' and P₃" for respective time intervals T₂ and T₂'. Once compressed air injection at pressure P₃" is completed, apparatus 20 activates compressed-air injection at second pressure P₂ to complete expansion of preform 2 and form the bottle.

By way of example, Figure 6 shows a "multiple" injection/recovery time graph, in which curve portion C indicates the increase in pressure in preform 2 when pre-injecting compressed air at first pressure P₁; curve portion D' indicates the increase in pressure in preform 2 when injecting compressed air at first intermediate pressure P₃' at the intermediate injection stage; curve portion D" indicates the increase in pressure in preform 2 when injecting compressed air at second intermediate pressure P₃" at the intermediate injection stage; curve portion A indicates the increase in pressure in preform 2 when injecting compressed air at second pressure P₂ at the high-pressure injection stage; curve portion B" indicates the fall in pressure in preform 2 when recovering compressed air at second pressure P₃"; and curve portion B' indicates the fall in pressure in preform 2 when recovering compressed air at first intermediate pressure P₃'.

Multiple injection/recovery by apparatus 20 as described above therefore clearly provides for greatly reducing the volume of high-pressure compressed gas/air required to complete expansion of the preform.

Clearly, changes may be made to apparatus 1 as described and illustrated herein without, however, departing from the scope of the present invention.

## Claims

1. An apparatus (1)(20) for blow molding at least one plastic container from a corresponding preform (2) of plastic material housed inside a mold (3) of said container; said apparatus (1) comprising:
- pre-injection means (4) for performing a first injection of a gas into said preform (2) at a predetermined first pressure (P1) to produce a first partial expansion of said preform (2) in said mold (3) to a predetermined initial volume (V1); said first pressure (P1) is approximately 10 bar;
- injection means (7) for performing a second injection of gas into the preform (2) at a predetermined second pressure (P2), higher than said first pressure (P1), to produce a complete expansion of said preform (2) onto the inner walls of said mold (3) and obtain said container of predetermined shape and of a predetermined final inner volume (V3); said second pressure (P2) ranges between 30 and 40 bar;
said apparatus (1) being **characterized by** comprising:
- two compressed-gas recovery/injection circuits (10a)(10b), which comprise each a tank (11a)(11b), and are configured to sequentially perform, at the end of said second injection where the injection of compressed air is cut off, two air recoveries of the compressed gas contained in said plastic container at different intermediate pressures (P3')(P3") inside said respective tanks (11a)(11b); said intermediate pressures (P3', P3") being higher than said first pressure (P1) and lower than said second pressure (P2) and one of said intermediate pressures (P3')(P3") is approximately 17 bar;
after said first injection and before said second injection, said recovery/injection circuits (10a, 10b) performing two consecutive additional compressed air injections of gas into said preform (2) at said respective intermediate pressures (P3')(P3") to produce consecutive intermediate expansions of the preform (2) to respective volumes smaller than said predetermined final volume (V3) of said container, and larger than said initial volume (V1).

2. An apparatus as claimed in Claim 1, wherein said recovery/injection circuits (10a, 10b) comprise recovery/injection conduits (13a, 13b) connecting said tanks (11a)( (11b) to said mold (3); and first control valves (12a, 12b) located along said recovery/injection conduits (13a, 13b), and movable, on command, between an open position permitting compressed-gas flow, along said recovery/injection conduits (13a, 13b), between the tanks (11a)(11b) and said mold (3), and a closed position cutting off said compressed-gas flow.

3. An apparatus as claimed in any one of the foregoing Claims, wherein said pre-injection means (4) comprise a second tank (5) for housing compressed gas at said first pressure (P1); a second conduit (4a) connecting said second tank (5) to said mold (3); and a second control valve (6) located along said second conduit (4a), and movable, on command, between an open position connecting the second tank (5) to said mold (3), and a closed position cutting off said connection.

4. An apparatus as claimed in any one of the foregoing Claims, wherein said injection means (7) comprise a third tank (8) for housing compressed gas at said second pressure (P2); a third conduit (7a) connecting said third tank (8) to said mold (3); and a third control valve (9) located along said third conduit (7a), and movable, on command, between an open position connecting the third tank (8) to said mold (3), and a closed position cutting off said connection.

5. An apparatus as claimed in claim 4 when claim 4 is dependent on claim 2, comprising a processing unit (18) configured to:
- close third control valve (9) and open one of said first control valves (12a, 12b) to cut off injection of compressed air at second pressure (P2) into preform (2), and at the same time starting two recoveries of the compressed air from the preform to said tanks (11a)(11b).

6. An apparatus as claimed in any one of the foregoing Claims, wherein said recovery/injection circuits (10a, 10b) recover the compressed gas from inside said container, until the pressure of the compressed gas in the container substantially equals said at least one predetermined intermediate pressure (P3', P3").

7. A method of blow molding at least one plastic container from a corresponding preform (2) of plastic material housed inside a mold (3) of said container;
said method comprising the steps of:
- performing a first injection of a gas into said preform (2) at a predetermined first pressure (P1), to produce a first partial expansion of said preform (2) in said mold (3) to a predetermined initial volume (V1); said first pressure (P1) is approximately 10 bar;
- performing a second injection of gas into the preform (2) at a predetermined second pressure (P2), higher than said first pressure (P1), to produce a complete expansion of said preform (2) onto the inner walls of said mold (3) and obtain said container of predetermined shape and of a predetermined final inner volume (V3); said second pressure (P2) ranges between 30 and 40 bar;
said method being **characterized by** comprising the steps of:
upon completion of said second injection, performing two consecutive recoveries of compressed gas from inside said container; each said recovery maintaining the recovered gas at a predetermined intermediate pressure (P3', P3") higher than said first pressure (P1) and
lower than said second pressure (P2);
after said first injection and before said second injection, performing two additional injections of recovered compressed gas into said preform (2) at corresponding intermediate pressures (P3', P3") to produce respective intermediate expansions of the preform (2) to volumes smaller than the predetermined final volume (V3) of said container;
one said intermediate pressures (P3', P3") being approximately 17 Bars.

## Patentansprüche

1. Vorrichtung (1) (20) zum Blasformen wenigstens eines Kunststoffbehälters aus einer entsprechenden Vorform (2) aus Kunststoffmaterial, die innerhalb einer Form (3) des Behälters angeordnet ist; wobei die Vorrichtung (1) umfasst:
- eine Voreinspritzeinrichtung (4) zum Durchführen einer ersten Einspritzung eines Gases in die Vorform (2) mit einem vorgegebenen ersten Druck (P1), um eine erste Teilausdehnung der Vorform (2) in der Form (3) bis zu einem vorgegebenen Anfangsvolumen (V1) zu bewirken; wobei der erste Druck (P1) ungefähr 10 bar beträgt;
- eine Einspritzeinrichtung (7) zum Durchführen einer zweiten Einspritzung von Gas in die Vorform (2) mit einem vorgegebenen zweiten Druck (P2), der höher ist als der erste Druck (P1), um eine vollständige Ausdehnung der Vorform (2) an die Innenwände der Form (3) zu bewirken und den Behälter mit vorgegebener Form und mit einem vorgegebenen endgültigen Innenvolumen (V3) zu erhalten; wobei der zweite Druck (P2) zwischen 30 und 40 bar liegt;
wobei die Vorrichtung (1) **dadurch gekennzeichnet ist, dass** sie umfasst:
- zwei Kreise (10a) (10b) zur Rückgewinnung/Einspritzung von Druckgas, von denen jeder einen Tank (11a) (11b) umfasst und welche derart ausgestaltet sind, dass sie am Ende der zweiten Einspritzung, wenn die Einspritzung der Druckluft abgeschaltet ist, sequenziell zwei Luftrückgewinnungen des Druckgases, das in dem Kunststoffbehälter enthalten ist, bei verschiedenen Zwischendrücken (P3') (P3") innerhalb der entsprechenden Tanks (11a) (11 b) durchführen können; wobei die Zwischendrücke (P3') (P3") höher sind als der erste Druck (P1) und geringer sind als der zweite Druck (P2) und einer der Zwischendrücke (P3') (P3") ungefähr 17 bar beträgt;
wobei die Kreise (10a, 10b) zur Rückgewinnung/Einspritzung nach der ersten Einspritzung und vor der zweiten Einspritzung zwei aufeinander folgende zusätzliche Drucklufteinspritzungen von Gas in die Vorform (2) mit den entsprechenden Zwischendrücken (P3') (P3") durchführen, um aufeinander folgende Zwischenausdehnungen der Vorform (2) auf entsprechende Volumen zu bewirken, die kleiner als das vorgegebene endgültige Volumen (V3) des Behälters und größer als das Anfangsvolumen (V1) sind.

2. Vorrichtung nach Anspruch 1, wobei die Kreise (10a, 10b) zur Rückgewinnung/Einspritzung Leitungen (13a, 13b) zur Rückgewinnung/Einspritzung, welche die Tanks (11a) (11 b) mit der Form (3) verbinden; und erste Steuerventile (12a, 12b) umfassen, die entlang der Leitungen (13a, 13b) zur Rückgewinnung/Einspritzung angeordnet sind und die auf Befehl zwischen einer geöffneten Stellung, welche eine Druckgasströmung entlang der Leitungen (13a, 13b) zur Rückgewinnung/Einspritzung zwischen den Tanks (11a) (11b) und der Form (3) erlaubt, und einer geschlossenen Stellung, welche die Druckgasströmung sperrt, bewegbar sind.

3. Vorrichtung nach einem der vorangehenden Ansprüche, wobei die Voreinspritzeinrichtung (4) einen zweiten Tank (5) zum Lagern von Druckgas bei einem ersten Druck (P1); eine zweite Leitung (4a), die den zweiten Tank (5) mit der Form (3) verbindet; und ein zweites Steuerventil (6), das entlang der zweiten Leitung (4a) angeordnet ist, umfasst, welches auf Befehl zwischen einer geöffneten Stellung, die den zweiten Tank (5) mit der Form (3) verbindet, und einer geschlossenen Stellung, welche die Verbindung sperrt, bewegbar ist.

4. Vorrichtung nach einem der vorangehenden Ansprüche, wobei die Einspritzeinrichtung (7) einen dritten Tank (8) zum Lagern von Druckgas bei dem zweiten Druck (P2); eine dritte Leitung (7a), die den dritten Tank (8) mit der Form (3) verbindet; und ein drittes Steuerventil (9), das entlang der dritten Leitung (7a) angeordnet ist, umfasst, welches auf Befehl zwischen einer geöffneten Stellung, die den dritten Tank (8) mit der Form (3) verbindet, und einer geschlossenen Stellung, welche die Verbindung sperrt, bewegbar ist.

5. Vorrichtung nach Anspruch 4, wenn Anspruch 4 von Anspruch 2 abhängig ist, umfassend eine Prozessoreinheit (18), die ausgelegt ist, um:
- das dritte Steuerventil (9) zu schließen und eines der ersten Steuerventil (12a, 12b) zu öffnen, um die Einspritzung von Druckluft mit dem zweiten Druck (P2) in die Vorform (2) zu sperren, und gleichzeitig zwei Rückgewinnungen von Druckluft von der Vorform zu den Tanks (11a) (11b) zu starten.

6. Vorrichtung nach einem der vorangehenden Ansprüche, wobei die Kreise (10a, 10b) zur Rückgewinnung/Einspritzung Druckgas von innerhalb des Behälters rückgewinnen bis der Druck des Druckgases in dem Behälter im Wesentlichen wenigstens einem vorgegebenen Zwischendruck (P3', P3") entspricht.

7. Verfahren zum Blasformen wenigstens eines Kunststoffbehälters aus einer entsprechenden Vorform (2) aus Kunststoffmaterial, die innerhalb einer Form (3) des Behälters angeordnet ist;
wobei das Verfahren folgende Schritte umfasst:
- Durchführen einer ersten Einspritzung eines Gases in die Vorform (2) mit einem vorgegebenen ersten Druck (P1), um eine erste Teilausdehnung der Vorform (2) in der Form (3) bis zu einem vorgegebenen Anfangsvolumen (V1) zu bewirken; wobei der erste Druck (P1) ungefähr 10 bar beträgt;
- Durchführen einer zweiten Einspritzung von Gas in die Vorform (2) mit einem vorgegebenen zweiten Druck (P2), der höher ist als der erste Druck (P1), um eine vollständige Ausdehnung der Vorform (2) an die Innenwände der Form (3) zu bewirken und den Behälter mit vorgegebener Form und mit einem vorgegebenen endgültigen Innenvolumen (V3) zu erhalten; wobei der zweite Druck (P2) zwischen 30 und 40 bar liegt;
wobei das Verfahren **dadurch gekennzeichnet ist, dass** es folgende Schritte umfasst:
Durchführen zweier aufeinander folgender Rückgewinnungen von Druckgas aus dem Inneren des Behälters bei Vollendung der zweiten Einspritzung; wobei jede Rückgewinnung das rückgewonnene Gas bei einem vorgegebenen Zwischendruck (P3', P3") hält, der höher ist als der erste Druck (P1) und geringer ist als der zweite Druck (P2);
Durchführen zweier zusätzlicher Einspritzungen von rückgewonnenem Druckgas in die Vorform (2) bei entsprechenden Zwischendrücken (P3', P3") nach der ersten Einspritzung und vor der zweiten Einspritzung, um entsprechende Zwischenausdehnungen der Vorform (2) auf Volumen zu bewirken, die kleiner sind als das vorgegebene endgültige Volumen (V3) des Behälters;
wobei einer der Zwischendrücke (P3', P3") ungefähr 17 bar beträgt.

## Revendications

1. Appareil (1) (20) pour le moulage par soufflage d'au moins un récipient en plastique à partir d'une paraison correspondante (2) en matière plastique, logée à l'intérieur d'un moule (3) dudit récipient ; ledit appareil (1) comprenant :
- des moyens de pré-injection (4) pour l'exécution d'une première injection d'un gaz dans ladite paraison (2) à une première pression prédéterminée (P1) pour produire une première expansion partielle de ladite paraison (2) dans ledit moule (3) jusqu'à un volume initial prédéterminé (V1) ; ladite première pression (P1) étant d'approximativement 10 bars ;
- des moyens d'injection (7) pour l'exécution d'une deuxième injection de gaz dans la paraison (2) à une deuxième pression prédéterminée (P2), supérieure à ladite première pression (P1), pour produire une expansion complète de ladite paraison (2) sur les parois intérieures dudit moule (3) et obtenir ledit récipient d'une forme prédéterminée et d'un volume intérieur final prédéterminé (V3) ; ladite deuxième pression (P2) étant comprise entre 30 et 40 bars ;
ledit appareil (1) étant **caractérisé en ce qu'**il comprend :
- deux circuits de récupération/injection de gaz comprimé (10a) (10b), qui comprennent chacun un réservoir (11a) (11b), et qui sont configurés pour exécuter séquentiellement, à la fin de ladite deuxième injection, où l'injection d'air comprimé est coupée, deux récupérations du gaz comprimé contenu dans ledit conteneur en plastique à des pressions intermédiaires différentes (P3') (P3") à l'intérieur desdits réservoirs respectifs (11a) (11b) ; lesdites pressions intermédiaires (P3', P3") étant supérieures à ladite première pression (P1) et inférieures à ladite deuxième pression (P2) et l'une desdites pressions intermédiaires (P3') (P3") étant d'approximativement 17 bars ;
après ladite première injection et avant ladite deuxième injection, lesdits circuits de récupération/injection (10a, 10b) exécutant deux injections additionnelles consécutives de gaz comprimé dans ladite paraison (2) auxdites pressions intermédiaires respectives (P3') (P3"), pour produire des expansions intermédiaires consécutives de la paraison (2) jusqu'à des volumes respectifs inférieurs audit volume final prédéterminé (V3) dudit récipient, et supérieurs audit volume initial (V1).

2. Appareil selon la revendication 1, dans lequel lesdits circuits de récupération/injection (10a, 10b) comprennent des conduites de récupération/injection (13a, 13b) reliant lesdits réservoirs (11a) (11b) audit moule (3) ; et des premières vannes de commande (12a, 12b) situées le long desdites conduites de récupération/injection (13a, 13b), et mobiles, sur commande, entre une position ouverte permettant l'écoulement du gaz comprimé, le long desdites conduites de récupération/injection (13a, 13b), entre les réservoirs (11a) (11b) et ledit moule (3), et une position fermée coupant ledit écoulement de gaz comprimé.

3. Appareil selon l'une quelconque des revendications précédentes, dans lequel lesdits moyens de pré-injection (4) comprennent un deuxième réservoir (5) pour loger du gaz comprimé à ladite première pression (P1) ; une deuxième conduite (4a) reliant ledit deuxième réservoir (5) audit moule (3) ; et une deuxième vanne de commande (6) située le long de ladite deuxième conduite (4a), et mobile, sur commande, entre une position ouverte reliant le deuxième réservoir (5) audit moule (3), et une position fermée coupant ladite liaison.

4. Appareil selon l'une quelconque des revendications précédentes, dans lequel lesdits moyens d'injection (7) comprennent un troisième réservoir (8) pour loger du gaz comprimé à ladite deuxième pression (P2) ; une troisième conduite (7a) reliant ledit troisième réservoir (8) audit moule (3) ; et une troisième vanne de commande (9) située le long de ladite troisième conduite (7a), et mobile, sur commande, entre une position ouverte reliant le troisième réservoir (8) audit moule (3), et une position fermée coupant ladite liaison.

5. Appareil selon la revendication 4 lorsque la revendication 4 dépend de la revendication 2, comprenant une unité de traitement (18) configurée pour :
- fermer la troisième vanne de commande (9) et ouvrir l'une desdites premières vannes de commande (12a, 12b) pour couper l'injection d'air comprimé à la deuxième pression (P2) dans la paraison (2), et en même temps démarrer deux récupérations de l'air comprimé depuis la paraison vers lesdits réservoirs (11a) (11b).

6. Appareil selon l'une quelconque des revendications précédentes, dans lequel lesdits circuits de récupération/injection (10a, 10b) récupèrent le gaz comprimé depuis l'intérieur dudit récipient, jusqu'à ce que la pression du gaz comprimé dans le récipient soit essentiellement égale à ladite au moins une pression intermédiaire prédéterminée (P3', P3").

7. Procédé de moulage par soufflage d'au moins un récipient en plastique à partir d'une paraison correspondante (2) en matière plastique, logée à l'intérieur d'un moule (3) dudit récipient ;
ledit procédé comprenant les étapes consistant à :
- exécuter une première injection d'un gaz dans ladite paraison (2) à une première pression prédéterminée (P1), pour produire une première expansion partielle de ladite paraison (2) dans ledit moule (3) jusqu'à un volume initial prédéterminé (V1) ; ladite première pression (P1) étant d'approximativement 10 bars ;
- exécuter une deuxième injection de gaz dans la paraison (2) à une deuxième pression prédéterminée (P2), supérieure à ladite première pression (P1), pour produire une expansion complète de ladite paraison (2) sur les parois intérieures dudit moule (3) et obtenir ledit récipient d'une forme prédéterminée et d'un volume intérieur final prédéterminé (V3) ; ladite deuxième pression (P2) étant comprise entre 30 et 40 bars ;
ledit procédé étant **caractérisé en ce qu'**il comprend les étapes consistant à :
à la fin de ladite deuxième injection, exécuter deux récupérations consécutives de gaz comprimé depuis l'intérieur dudit récipient ; chacune desdites récupération maintenant le gaz récupéré à une pression intermédiaire prédéterminée (P3', P3 ") supérieure à ladite première pression (P1) et inférieure à ladite deuxième pression (P2) ;
après ladite première injection et avant ladite deuxième injection, exécuter deux injections additionnelles de gaz comprimé récupéré dans ladite paraison (2) à des pressions intermédiaires correspondantes (P3', P3"), pour produire des expansions intermédiaires respectives de la paraison (2) jusqu'à des volumes inférieurs au volume final prédéterminé (V3) dudit récipient ;
l'une desdites pressions intermédiaires (P3', P3") étant d'approximativement 17 bars.
